# DEMANDE DE BREVET EUROPEEN

(11) **EP 2 058 558 A1**
(43) Date de publication de la demande: **13.05.2009**
(21) Numéro de dépôt: 08168124.9
(22) Date de dépôt: 31.10.2008
(51) Int. Cl.: F16H 3/12

(54) **Véhicule à système de synchronisation d'une boîte de vitesses pilotée et procédé de commande du système de synchronisation**

(30) Priorité: 08.11.2007 FR 0758869
(71) Demandeur: Peugeot Citroën Automobiles Société Anonyme, 78170 Velizy Villacoublay (FR)
(72) Inventeur: Mitchell, Clément, 92250 La Garenne Colombes (FR)

(57) **Abrégé**

L'invention concerne un véhicule à système de synchronisation d'une boîte de vitesses pilotée et son procédé de commande.

Le véhicule selon l'invention comprend un moteur (10), une boîte de vitesses pilotée (12) comportant un arbre primaire (26) et un arbre secondaire (28).

Le système comprend un frein (59) interposé entre l'arbre primaire (26) et un carter (30) de la boîte de vitesses (12). Le frein est apte à être actif en freinant l'arbre primaire (26) quand la vitesse de ce dernier doit être abaissée.

Un dispositif de rétrogradage du système est apte à commander une accélération du moteur (10) lorsque le frein (59) est inactif et un embrayage (14) est dans une position fermée pour augmenter la vitesse de l'arbre primaire (26), alors qu'un manchon (56, 57, 58) est en position découplée de manière que l'arbre primaire (26) tourne indépendamment de l'arbre secondaire (28).

## Description

La présente invention est relative d'une part à des véhicules comportant un système de synchronisation d'une boîte de vitesses pilotée et d'autre part à un procédé de commande d'un tel système de synchronisation.

Le document WO9110079 décrit un véhicule équipé d'une boîte de vitesses dans laquelle est prévu un système de synchronisation comportant un arbre additionnel portant des pignons additionnels et un système à deux embrayages agissant tant pour freiner l'arbre primaire lors d'un changement de rapport supérieur, ou montée de rapport, que pour accélérer l'arbre primaire lors d'un changement de rapport inférieur ou rétrogradage. Ce système a pour inconvénient d'être encombrant et complexe. De plus, le système d'embrayage accélère l'arbre primaire en couplant les pignons additionnels avec un pignon solidaire de l'arbre primaire et avec un pignon d'une paire entraînée par l'arbre secondaire. Or, l'arbre secondaire et ses pignons utilisés pour l'accélération de l'arbre primaire font partie d'une chaîne de traction dont des variations de vitesse de rotation sont ressenties par des occupants du véhicule. De ce fait l'accélération de l'arbre primaire se faisant en utilisant l'inertie de la chaîne de traction, l'accélération de l'arbre primaire tend à provoquer des oscillations dans la chaîne de traction, au détriment du confort des occupants. De plus, l'inertie de la chaîne de traction nuit à la rapidité d'accélération de l'arbre primaire.

La présente invention a notamment pour but de remédier à ces inconvénients.

A cet effet, l'invention a pour objet un véhicule comprenant un moteur, une boîte de vitesses pilotée qui comporte un arbre primaire lié en rotation au moteur par l'intermédiaire d'un embrayage, un arbre secondaire lié en rotation à au moins une roue motrice du véhicule et une pluralité de paires de pignons engrenés déterminant chacune un rapport de démultiplication de marche avant et comportant chacune un premier pignon solidaire de l'un des arbres et un deuxième pignon monté fou en rotation sur l'autre arbre, au moins un manchon à crabot alternativement en position accouplée en liant en rotation un des deuxièmes pignons et son arbre et en position découplée libre en rotation par rapport au deuxième pignon, et comportant un système de synchronisation des vitesses de rotation des arbres permettant le passage du manchon de sa position découplée à sa position accouplée en ajustant les vitesses de rotation du deuxième pignon et du manchon à crabots à accoupler, caractérisé en ce que le système de synchronisation comprend d'une part, un frein qui est interposé entre l'arbre primaire et un carter de la boîte de vitesses et qui est apte à être actif en freinant l'arbre primaire quand la vitesse de ce dernier doit être abaissée jusqu'à atteindre à une vitesse cible déterminée par la vitesse de l'arbre secondaire, et d'autre part un dispositif de rétrogradage qui est apte à commander une accélération du moteur, lorsque le frein est inactif et l'embrayage est dans une position fermée, pour augmenter la vitesse de l'arbre primaire jusqu'à atteindre une vitesse cible déterminée par la vitesse de l'arbre secondaire, alors que le manchon est en position découplée de manière que l'arbre primaire tourne indépendamment de l'arbre secondaire.

Dans divers modes de réalisation du véhicule selon l'invention, on peut éventuellement avoir recours en outre à l'une et/ou à l'autre des dispositions suivantes :
- le frein est interposé entre un axe fixe solidaire du carter parallèlement à l'arbre primaire et un pignon de frein qui est monté fou sur l'axe fixe et qui est engrené avec un pignon de solidaire de l'arbre primaire ;
- le pignon solidaire de l'arbre primaire est un pignon de renvoi distinct des pignons des paires de pignons de marche avant ;
- l'axe fixe porte, monté fou et à l'opposé du pignon de frein, l'un de deux pignons de marche arrière dont l'autre pignon est solidaire de l'arbre secondaire ;
- le pignon de frein est solidaire d'un tambour relié de façon débrayable au pignon de marche arrière monté fou sur l'axe fixe ;
- le frein comporte une pluralité de disques dont une première série est solidaire de l'axe fixe et une deuxième série est solidaire du tambour ;
- le frein est adapté à être actif en freinant l'arbre primaire avant le passage du manchon à crabots de sa positon découplée à sa position accouplée lors d'une montée de rapport de vitesse ou lors de l'engagement d'un premier rapport de marche avant ou lors de l'engagement du rapport de marche arrière ;
- le tambour est relié de façon débrayable au pignon de marche arrière par l'intermédiaire d'un synchroniseur de marche arrière ;

Par ailleurs, l'invention a également pour objet un procédé de commande d'un système de synchronisation de boîte de vitesses pilotée de véhicule selon l'invention, caractérisé en ce que, dans un premier type de phase de changement de rapport, durant laquelle la vitesse initiale de l'arbre primaire est égale à celle d'un arbre de sortie du moteur et une vitesse cible de l'arbre primaire est déterminée par celle de l'arbre secondaire et est inférieure à la vitesse initiale, il comporte une étape d'actionnement du frein pendant laquelle l'arbre primaire est freiné jusqu'à la vitesse cible, puis une étape de couplage d'un manchon à crabots et d'un pignon de la paire de pignons d'un rapport cible et en ce que dans un deuxième type de phase de changement de rapport en rétrogradant d'un rapport supérieur à un rapport inférieur, durant laquelle le frein est inactif, la vitesse initiale de l'arbre primaire est égale à celle de l'arbre de sortie du moteur et la vitesse cible de l'arbre primaire est déterminée par celle de l'arbre secondaire et est supérieure à la vitesse initiale, il comporte une étape de découplage d'un manchon à crabots et d'un pignon de la paire de pignons du rapport supérieur, puis une étape d'accélération du moteur à la vitesse cible, suivie d'une étape d'accouplement d'un manchon à crabots et d'un pignon de la paire de pignons du rapport inférieur.

Dans divers modes de réalisation du procédé selon l'invention, on peut éventuellement avoir recours en outre à l'une et/ou à l'autre des dispositions suivantes :
- la phase de premier type est une phase de montée d'un rapport de vitesse ;
- lors de la phase de montée d'un rapport de vitesse, un effort est appliqué par un actionneur d'un manchon à crabots avant une ouverture de l'embrayage qui intervient simultanément à une commande d'actionnement du frein, l'ouverture de l'embrayage pouvant être partielle ;
- lors de la phase de montée d'un rapport de vitesse, l'embrayage est fermé et l'étape d'actionnement du frein suit l'étape de découplage du manchon à crabots et du pignon de la paire de pignons du rapport inférieur ;
- lors de la phase de montée d'un rapport de vitesse, l'embrayage est fermé et l'étape d'actionnement du frein est simultanée à l'étape de découplage du manchon à crabots et du pignon de la paire de pignons du rapport inférieur ;
- lors de la phase de deuxième type de changement de rapport en rétrogradant, une ouverture de l'embrayage et une fermeture de l'embrayage sont effectuées respectivement avant et après l'étape de découplage du manchon à crabots et du pignon de la paire de pignons du rapport supérieur ;
- lors de la phase de deuxième type de changement de rapport en rétrogradant, une ouverture de l'embrayage et une fermeture de l'embrayage sont effectuées respectivement avant et après l'étape d'accouplement du manchon à crabots et du pignon de la paire de pignons du rapport inférieur ;
- la phase de premier type est une phase d'engagement d'un premier rapport de marche avant qui comporte une étape d'ouverture de l'embrayage, puis l'étape d'actionnement du frein pendant laquelle l'arbre primaire est freiné jusqu'à une vitesse cible déterminée par celle de l'arbre secondaire, suivie d'une étape de couplage d'un manchon à crabots et d'un pignon de la paire de pignons du premier rapport, et d'une étape de fermeture de l'embrayage ;
- la phase de premier type est une phase d'engagement du rapport de marche arrière qui comporte une étape d'ouverture de l'embrayage, puis une étape d'actionnement du frein pendant laquelle l'arbre primaire est freiné jusqu'à une vitesse cible déterminée par celle de l'arbre secondaire, suivie d'une étape de couplage d'un manchon à crabots et d'un pignon de la paire de pignons du premier rapport, et d'une étape de fermeture de l'embrayage.

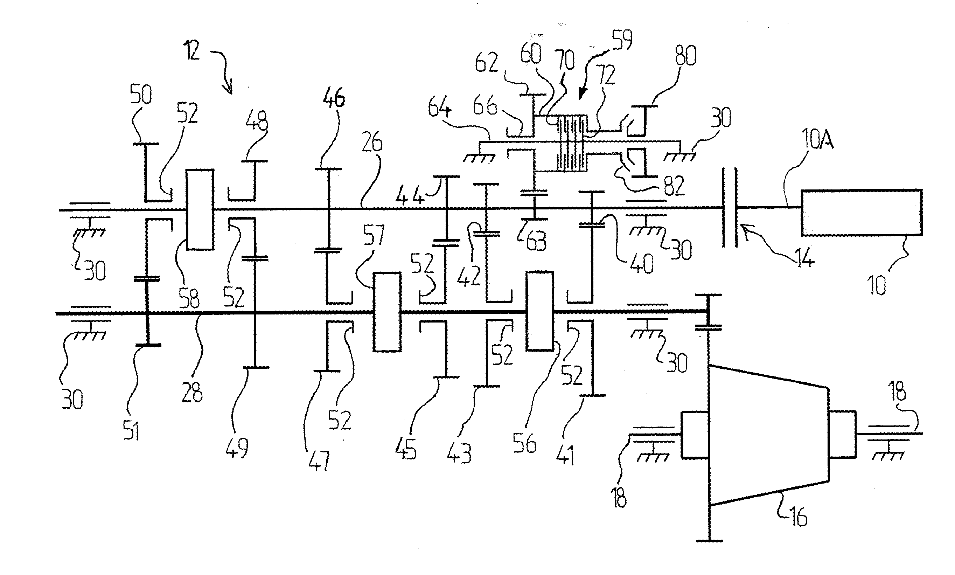

D'autres buts, caractéristiques et avantages de l'invention apparaîtront au cours de la description suivante de plusieurs modes de réalisation, donnés à titre d'exemples non limitatifs, en regard de la planche de dessin jointe sur laquelle la figure est un schéma de principe d'un groupe moto propulseur de véhicule selon un mode de réalisation de l'invention.

Le véhicule selon l'invention comporte un groupe moto propulseur ayant un moteur 10 présentant un arbre de sortie 10A et une boîte de vitesses pilotée 12, entre lesquels un embrayage piloté 14 est interposé. Des moyens de pilotage non représentés, tels qu'un calculateur, pilotent le fonctionnement automatique de la boîte de vitesses. Les moyens de pilotage pilotent également des moyens d'actionnement de l'embrayage 14 pour l'ouvrir et le fermer. Un différentiel 16 est disposé en sortie de la boîte de vitesses afin d'entraîner des roues motrices du véhicule par l'intermédiaire de deux transmissions 18.

La boîte de vitesses 12 comporte un arbre primaire 26 et un arbre secondaire 28 qui sont montés en rotation par l'intermédiaire de paliers dans un carter 30.

Selon le mode de réalisation représenté, les arbres 26 et 28 portent six paires de pignons engrenés en permanence pour déterminer un rapport de démultiplication, à savoir les pignons référencés 40 et 41 pour le premier rapport de marche avant du véhicule ou première vitesse, 42 et 43 pour le deuxième rapport, 44 et 45 pour le troisième rapport, 46 et 47 pour le quatrième rapport, 48 et 49 pour le cinquième rapport, 50 et 51 pour le sixième rapport.

Chaque paire de pignons de marche avant comporte un pignon dit fixe qui est solidaire de l'un des arbres et un pignon dit fou monté en rotation sur l'autre des arbres par l'intermédiaire d'un palier. Ainsi, sur l'arbre primaire 26, les pignons fixes sont les pignons des premier 40, deuxième 42, troisième 44 et quatrième 46 rapports, et sur l'arbre secondaire 28, les pignons fixes sont les pignons des cinquième 49 et sixième 51 rapports.

La boîte de vitesses comporte trois manchons à crabots 56, 57 et 58 respectivement montés entre les pignons fous 41 et 43, entre les pignons fous 45 et 47 et entre les pignons fous 48 et 50 afin d'accoupler chacun de ces pignons fous et l'arbre 26 ou 28 qui lui correspond pour qu'un rapport soit engagé.

Chaque manchon est monté mobile axialement sur son arbre et est solidaire en rotation de cet arbre, entre une position découplée et une position accouplée dans laquelle des crabots internes de chaque manchon (non représentés) sont en prise avec des crabots 52 du pignon fou correspondant. Pour pouvoir passer de sa position découplée à sa position accouplée, un système de synchronisation permet à chaque manchon 56, 57 ou 58 d'avoir la même vitesse de rotation que le pignon 41, 43, 45, 47, 48 ou 50 avec lequel il doit s'engrener par l'intermédiaire des crabots correspondants.

Le système de synchronisation comporte des actionneurs connus en soi, de déplacement des manchons à crabots 56, 57, 58, et qui sont pilotés par les moyens de pilotage automatique de la boîte de vitesses, par exemple pour opérer un changement de rapport commandé par le conducteur dans un mode impulsionnel de fonctionnement de la boîte pilotée. Ces actionneurs déplacent des fourchettes, non représentées, liées aux manchons.

Le système de synchronisation comporte également un frein 59 pouvant être commandé pour les montées de rapport ou l'engagement d'un premier rapport de marche avant.

Le système de synchronisation comporte en outre un dispositif permettant le rétrogradage d'un rapport de vitesse. Pour le rétrogradage, le dispositif met en oeuvre les moyens de pilotage, les moyens d'actionnement de l'embrayage 14 et les actionneurs de déplacement des manchons à crabots 56, 57, 58.

De préférence, le frein 59 comporte un corps 60 en forme générale de tambour à une extrémité duquel est disposé un pignon de frein 62 engrené en permanence avec un pignon fixe de renvoi 63 qui est solidaire de l'arbre primaire.

Le pignon de frein 62 est montée fou en rotation par l'intermédiaire d'un palier 66 sur un axe fixe 64 solidaire du carter 30, parallèlement à l'arbre primaire 26.

La paroi périphérique du tambour 60 délimite un logement interne cylindrique comportant des premiers disques formés par une série de plaques radiales annulaires de freinage 70 qui sont fixées à translation par une liaison de type cannelure à leur périphérie à la face interne de la paroi périphérique et qui sont traversées coaxialement par l'axe 64. En regard des plaques 70, le frein comporte une série de deuxièmes disques de freinage 72 qui sont solidaires de l'axe fixe 64 perpendiculairement à ce dernier et qui sont de ce fait fixes par rapport au carter 30. Quand le frein est inactif, les disques 72 ne sont pas en contact avec les plaques 70 et il n'y a par conséquent pas de freinage. Des organes d'actionnement, non représentés, par exemple électromagnétiques ou par un manchon commandé à translation, permettent de rendre le frein 59 actif, en rapprochant les disques 72 et les plaques 70 pour les amener en contact de friction pour freiner l'arbre primaire 26 par l'intermédiaire du pignon 62 et du pignon 63, et ce indépendamment de l'arbre secondaire et de la chaîne de traction qui en est solidaire.

La boîte de vitesses comprend un pignon intermédiaire de marche arrière 80 monté fou sur l'axe fixe 64 et qui engrène avec un autre pignon de marche arrière solidaire de l'arbre secondaire 28, ce dernier pignon n'étant pas représenté sur la figure.

Un synchroniseur de marche arrière 82 est monté entre le tambour 60 et le pignon de marche arrière 80, en étant disposé à l'opposé du pignon fou 62. Le synchroniseur 82 est de type classique, avec une couronne et un ou plusieurs anneaux de friction non représentés. En position découplée du synchroniseur 82 de marche arrière, le tambour 60 et le pignon 80 tournent à des vitesses différentes, et à sa position accouplée, le tambour 60 et le pignon 80 tournent à la même vitesse.

Différentes phases de fonctionnement du système de synchronisation vont être maintenant décrites.

Durant ces phases, chaque ouverture et chaque fermeture de l'embrayage 14 sont effectuées par le biais des moyens d'actionnement de l'embrayage qui sont commandés par les moyens de pilotage. Le frein 59 est actionné par les organes d'actionnement, sous la commande des moyens de pilotage. Les manchons de crabots 56, 57, 58 sont translatés par les actionneurs, sous la commande des moyens de pilotage.

Un premier type de phase correspond aux phases suivantes : engagement du premier rapport de marche avant quand le véhicule est à l'arrêt, montée de rapport, c'est-à-dire changement de rapport en passant d'un rapport inférieur à un rapport supérieur, et engagement du rapport de marche arrière.

Préalablement à la phase d'engagement du premier rapport de marche, le véhicule est considéré à l'arrêt, ce qui implique dans ce cas que l'arbre secondaire 28 est à l'arrêt, que chacun des manchons de crabots est en positon découplée, que le synchroniseur 82 est en position découplée et que l'embrayage 14 est fermé. Comme l'embrayage est fermé l'arbre primaire 26 tourne au même régime que le moteur 10.

Pendant la phase d'engagement du premier rapport de marche avant, l'embrayage 14 est tout d'abord ouvert pour découpler l'arbre primaire 26 et le moteur 10. Le frein 59 est alors actionné pour arrêter rapidement l'arbre primaire. Les arbres primaire et secondaire étant tous les deux arrêtés, le manchon à crabots 56 est alors translaté vers le pignon fou 41, jusqu'à être en position accouplée avec ce dernier, c'est-à-dire jusqu'à ce que les crabots du manchon 56 et ceux du pignon 41 soient engrenées. Le rapport étant engagé, l'embrayage 14 peut alors être refermé progressivement pour la mise en mouvement du véhicule.

Dans le cas où le véhicule n'est pas à l'arrêt préalablement à la phase d'engagement du premier rapport de marche avant, le principe reste le même, l'arbre primaire étant dans ce cas freiné jusqu'à un régime cible fonction de la vitesse de rotation de l'arbre secondaire et du rapport de démultiplication du premier rapport.

Avantageusement, sous l'action du frein, les vitesses de rotation des arbres sont ajustés très rapidement du fait que le pignon 62 du frein agit directement sur le pignon de renvoi 63 qui est solidaire de l'arbre primaire. Ainsi, le frein doit vaincre seulement l'inertie de l'arbre primaire, du corps 60 et du pignon 62, au bénéfice du temps de freinage. Du fait de l'ajustement rapide de la vitesse des arbres, le changement de rapport peut être effectué avec la rapidité d'un changement de rapport d'une boîte de vitesses manuelle à crabots de véhicule de compétition exécuté par un pilote expérimenté.

Avantageusement, le manchon à crabots 56 est accouplé avec le pignon fou 41 sans choc, au bénéfice du confort, du silence de fonctionnement de la boîte de vitesses et de la réduction de l'usure de la boîte de vitesses.

Pendant une phase de montée de rapport, par exemple pour passer du premier rapport de vitesse au deuxième rapport de vitesse, l'embrayage 14 est ouvert, puis le manchon 56 est découplé du pignon 41 par translation. Le frein est alors immédiatement actionné dans une étape de freinage ayant pour but de freiner les inerties de l'arbre primaire 26, de ses pignons fixes 40, 42, 44 et 46, ainsi que l'inertie des pignons fous 41, 43, 45 et 47 qui sont engrenés avec lesdits pignons fixes. Pendant l'étape de freinage, les plaques 70 et les disques 72 sont en contact de friction jusqu'à ce que l'arbre primaire 26 soit freiné à une vitesse de rotation cible déterminée de façon que le pignon fixe 42 engrené avec le pignon fou 43 entraîne ce dernier, compte tenu du rapport de démultiplication du deuxième rapport de vitesse, à la vitesse de rotation de l'arbre secondaire 28 entraîné par les roues du véhicule. Quand les vitesses de rotation sont ajustées comme ci-dessus indiqué, ou juste avant la fin de cet ajustement, le frein est immédiatement rendu inactif et le manchon à crabots 56 est couplé avec le pignon 43 par translation. Ensuite, l'embrayage 14 est fermé.

Avantageusement, l'intervalle de temps nécessaire au déplacement du manchon 56 entre ses deux positions accouplées est suffisant pour permettre dans le même temps d'effectuer le freinage de l'arbre primaire 26 entre sa vitesse initiale correspondant au régime du moteur 10 immédiatement avant la phase de montée de rapport et sa vitesse cible. Cette dernière est déterminée par la vitesse de l'arbre secondaire 28 immédiatement avant la phase de montée de rapport, en tenant compte du rapport de démultiplication de la paire de pignons 42 et 43. La différence de vitesse est déterminée simplement en fonction du rapport supérieur à engager et du régime initial du moteur, ce régime déterminant la vitesse initiale de toute la chaîne de traction du véhicule incluant les arbres et les pignons en prise immédiatement avant la phase de montée de rapport.

Pour un changement de rapport entre par exemple le quatrième rapport et le cinquième rapport, le processus est sur le même principe, deux manchons à crabots étant ici successivement actionnés, à savoir le manchon 57 qui est découplé du pignon 47 par translation avant le freinage et le manchon 58 qui est accouplé avec le pignon 47 par translation après le freinage. Ici, la vitesse cible de l'arbre primaire 26 est déterminée par celle de l'arbre secondaire 28 immédiatement avant la phase de montée de rapport, en tenant compte du rapport de démultiplication de la paire de pignons 48 et 49.

Pendant une phase d'engagement du rapport de marche arrière, l'embrayage 14 est tout d'abord ouvert et le frein 59 est au repos. Comme l'arbre primaire 26 et le moteur sont découplés, le synchroniseur 82 est actionné de façon classique par coulissement de sa couronne pour l'engrener avec le ou les éléments de friction solidaires en rotation du pignon de marche arrière et égaliser progressivement par friction la vitesse du corps 60 avec celle du pignon 80 et enfin mettre ces derniers en prise. Le rapport de marche arrière étant engagé, l'embrayage 14 peut alors être refermé progressivement pour la mise en mouvement du véhicule.

Un deuxième type de phase correspond à un changement de rapport en rétrogradant, dit rétrogradage, pendant lequel il y a passage d'un rapport de vitesse supérieur à un rapport de vitesse inférieur.

Pendant la phase de rétrogradage, par exemple pour passer du deuxième rapport de vitesse au premier rapport de vitesse, alors que le véhicule roule, le frein n'est pas utilisé. Pendant diverses étapes de cette phase, l'embrayage 14 est ouvert, puis le manchon 56 est découplé du pignon 43, puis l'embrayage 14 est fermé. Ensuite, le régime du moteur est accéléré jusqu'à un régime cible déterminé par la vitesse de l'arbre secondaire en tenant compte du rapport de démultiplication de la paire de pignons 40 et 41. L'embrayage 14 est alors ouvert, puis le manchon 56 est accouplé avec le pignon 41, et enfin, l'embrayage 14 est fermé. L'accélération du régime du moteur est par exemple commandée par les moyens de pilotage de la boîte qui envoient un signal à une unité de gestion du fonctionnement du moteur afin que cette dernière fasse monter le moteur en régime. L'augmentation de régime à commander au moteur est déterminée simplement en fonction du rapport inférieur à engager et du régime initial du moteur.

Le changement de rapport en rétrogradant est très rapide du fait que la seule inertie intervenant lors du changement de rapport est celle du moteur qui accélère à vide du fait qu'il doit vaincre uniquement l'inertie de l'arbre primaire. En effet, pendant l'accélération, l'arbre primaire 26 tourne indépendamment de l'arbre secondaire 28, c'est-à-dire qu'aucun pignon de l'arbre secondaire n'entraîne l'arbre primaire.

Selon une première variante simplifiée de phase de montée de rapport pour passer d'un rapport inférieur à un rapport supérieur, les actionneurs commencent à appliquer un effort de type visant à découpler le manchon et le pignon fou du rapport inférieur alors que l'embrayage est fermé, l'effort étant insuffisant pour désaccoupler le manchon et le pignon, c'est-à-dire insuffisant pour vaincre un verrouillage du manchon déterminé par un dispositif anti-lâcher visant à empêcher un désengagement intempestif du rapport alors qu'un couple moteur est transmis. Une fois ledit effort appliqué, l'embrayage est ouvert complètement ou partiellement simultanément à un actionnement du frein, le manchon passant alors en position découplée. Dès que les vitesses des arbres sont ajustées, le manchon est couplé avec le pignon fou du rapport supérieur, puis l'embrayage est fermé.

Selon une deuxième variante simplifiée de phase de montée de rapport pour passer d'un rapport inférieur à un rapport supérieur, l'embrayage n'est pas ouvert. Dans ce cas, le fonctionnement du moteur est géré en réduisant le couple transmis et/ou les actionneurs appliquent un effort suffisant pour découpler le manchon alors que l'embrayage est fermé. Simultanément au découplage ou après ce dernier, le frein est actionné jusqu'à ce que l'arbre primaire accouplé au moteur soit freiné à la vitesse cible, puis le manchon à crabots est couplé avec le pignon fou du rapport supérieur. Ici, le frein doit être suffisamment puissant pour freiner tant l'arbre primaire que le moteur. L'ajustement des vitesses doit être plus fine que dans les phases de montée de rapport décrites ci avant pour éviter les chocs et les bruits de crabotage.

Selon une variante simplifiée de phase de changement de rapport en rétrogradant, l'embrayage reste fermé après que le moteur ait été accéléré et que les vitesses de rotations des arbres aient été de ce fait ajustées. Le manchon est accouplé sans choc avec le pignon fou du rapport inférieur alors que l'embrayage est fermé pour peu que les vitesses aient été ajustées suffisamment finement, au bénéfice de la rapidité d'exécution du changement de rapport. De plus, quand la gestion du moteur est adaptée, par exemple en réduisant le couple transmis par le moteur, l'embrayage reste fermé lors du découplage du manchon de rapport inférieur qui est effectué avant l'accélération du moteur.

Selon une variante de réalisation du dispositif de synchronisation, le synchroniseur de marche arrière est remplacé par un dispositif pourvu d'un manchon de marche arrière à crabots entre le corps 60 et le pignon 80. Dans ce cas, pendant la phase d'engagement du rapport de marche arrière alors que le véhicule est à l'arrêt, l'embrayage est tout d'abord ouvert et le frein est actionné jusqu'à l'arrêt de la rotation du corps 60, du pignon 62 associé et du pignon 63 solidaire de l'arbre primaire. Le manchon de marche arrière peut alors être accouplé avec le pignon 80 et l'embrayage refermé progressivement pour faire reculer le véhicule.

Selon une variante d'architecture, le frein n'est pas placé au niveau de l'axe de marche arrière, mais il est par exemple implanté sur l'arbre primaire à côté du pignon fou du sixième rapport. Dans ce cas, le frein est de type embrayage multi disques dont les disques de la partie rotor sont liés à l'arbre primaire par cannelures et les disques de la partie stator sont liés au carter par cannelures sous roulement, ou inversement.

Selon une variante de réalisation, le frein comporte un système de friction type conique en lieu et place des disques.

Avantageusement, l'invention permet de supprimer les synchroniseurs habituellement utilisés dans les boîtes de vitesses de type robotisées, en les remplaçant par des manchons à crabots qui permettent de rendre plus rapide les engagements de rapport du fait que les phases de synchronisation, vol libre des manchons en position découplée et crabotage simultanées des synchroniseurs classiques sont ici rendues indépendantes. Ainsi il y a un découplage rapide des manchons à crabots, un ajustement rapide de vitesse de rotation des arbres du fait d'inerties minimales et un accouplement rapide des manchons à crabots.

Avantageusement, l'invention permet de proposer une centralisation de l'ajustement des vitesses d'arbres primaire et secondaire pour l'ensemble des rapports, tout en limitant l'impact de l'inertie de l'arbre primaire lors de la synchronisation sur l'inertie de la chaîne de traction solidaire de l'arbre secondaire, permettant d'éviter des oscillations de la vitesse de cette dernière, au bénéfice du confort dans le véhicule.

Avantageusement, dans le mode de réalisation de l'invention qui est représenté, le frein 59 étant situé au niveau de l'axe de marche arrière, la boîte de vitesse peut conserver sensiblement son encombrement habituel. Une architecture de boîte de vitesses classique peut être conservée. En particulier, le pignon de marche arrière 80 peut être un pignon de marche arrière de boîte de vitesse manuelle synchronisée classique. Les fourchettes de commande, les moyens d'actionnement de l'embrayage, le type d'embrayage ou les actionneurs de crabots peuvent être du type de ceux utilisés pour commander des synchroniseurs classiques de boîte robotisée.

Avantageusement, l'invention peut être utilisée quelle que soit le mode de commutation de la boîte, c'est-à-dire de type séquentielle ou pilotée.

## Revendications

1. Véhicule comprenant un moteur (10), une boîte de vitesses pilotée (12) qui comporte un arbre primaire (26) lié à rotation au moteur par l'intermédiaire d'un embrayage (14), un arbre secondaire (28) lié à rotation à au moins une roue motrice du véhicule et une pluralité de paires de pignons engrenés (40, 41 ; 42, 43 ; 44, 45 ; 46, 47 ; 48, 49 ; 50, 51) déterminant chacune un rapport de démultiplication de marche avant et comportant chacune un premier pignon (40, 42, 44, 46, 49, 51) solidaire de l'un des arbres et un deuxième pignon (41, 43, 45, 47, 48, 50) monté fou à rotation sur l'autre arbre, au moins un manchon à crabots (56, 57, 58) alternativement en position accouplée en liant en rotation un des deuxièmes pignons et son arbre et en position découplée libre en rotation par rapport au deuxième pignon, et comportant un système de synchronisation des vitesses de rotation des arbres permettant le passage du manchon (56, 57, 58) de sa position découplée à sa position accouplée en ajustant les vitesses de rotation du deuxième pignon (41, 43, 45, 47, 48, 50) et du manchon à crabots (56, 57, 58) à accoupler, **caractérisé en ce que** le système de synchronisation comprend d'une part, un frein (59) qui est interposé entre l'arbre primaire (26) et un carter (30) de la boîte de vitesses (12) et qui est apte à être actif en freinant l'arbre primaire (26) quand la vitesse de ce dernier doit être abaissée jusqu'à atteindre une vitesse cible déterminée par la vitesse de l'arbre secondaire (28), et d'autre part un dispositif de rétrogradage qui est apte à commander une accélération du moteur (10), lorsque le frein (59) est inactif et l'embrayage (14) est dans une position fermée, pour augmenter la vitesse de l'arbre primaire (26) jusqu'à atteindre une vitesse cible déterminée par la vitesse de l'arbre secondaire (28), alors que le manchon (56, 57, 58) est en position découplée de manière que l'arbre primaire (26) tourne indépendamment de l'arbre secondaire (28).

2. Véhicule selon la revendication 1, dans lequel le frein (59) est interposé entre un axe fixe (64) solidaire du carter (30) parallèlement à l'arbre primaire (26) et un pignon de frein (62) qui est monté fou sur l'axe fixe (64) et qui est engrené avec un pignon (63) solidaire de l'arbre primaire (26).

3. Véhicule selon la revendication 2, dans lequel le pignon (63) solidaire de l'arbre primaire (26) est un pignon de renvoi distinct des pignons (40, 41 ; 42, 43 ; 44, 45 ; 46, 47 ; 48, 49 ; 50, 51) des paires de pignons de marche avant.

4. Véhicule selon l'une quelconque des revendications 2 ou 3, dans lequel l'axe fixe (64) porte, monté fou et à l'opposé du pignon de frein (62), l'un (80) de deux pignons de marche arrière dont l'autre pignon est solidaire de l'arbre secondaire (28).

5. Véhicule selon la revendication 4, dans lequel le pignon de frein (62) est solidaire d'un tambour (60) relié de façon débrayable au pignon de marche arrière (80) monté fou sur l'axe fixe (64).

6. Véhicule selon la revendication 5, dans lequel le frein (59) comporte une pluralité de disques (70, 72) dont une première série (72) est solidaire de l'axe fixe (64) et une deuxième série (70) est solidaire du tambour (60).

7. Véhicule selon l'une quelconque des revendications 1 à 6, dans lequel le frein (59) est adapté à être actif en freinant l'arbre primaire (26) avant le passage du manchon à crabots (56, 57, 58) de sa positon découplée à sa position accouplée lors d'une montée de rapport de vitesse ou lors de l'engagement d'un premier rapport de marche avant ou lors de l'engagement du rapport de marche arrière.

8. Véhicule selon l'une quelconque des revendications 5 ou 6, dans lequel le tambour (60) est relié de façon débrayable au pignon de marche arrière (80) par l'intermédiaire d'un synchroniseur (82) de marche arrière.

9. Procédé de commande d'un système de synchronisation de boîte de vitesses pilotée (12) de véhicule selon l'une quelconque des revendications précédentes, **caractérisé en ce que**, dans un premier type de phase de changement de rapport, durant laquelle une vitesse initiale de l'arbre primaire (26) est égale à celle d'un arbre de sortie (10A) du moteur (10) et une vitesse cible de l'arbre primaire (26) est déterminée par celle de l'arbre secondaire (28) et est inférieure à la vitesse initiale, il comporte une étape d'actionnement du frein (59) pendant laquelle l'arbre primaire (26) est freiné jusqu'à la vitesse cible, puis une étape de couplage d'un manchon à crabots (56, 57, 58) et d'un pignon (41, 43, 45, 47, 48, 50) de la paire de pignons d'un rapport cible et **en ce que** dans un deuxième type de phase de changement de rapport en rétrogradant d'un rapport supérieur à un rapport inférieur, durant laquelle le frein (59) est inactif, la vitesse initiale de l'arbre primaire (26) est égale à celle de l'arbre de sortie (10A) du moteur (10) et la vitesse cible de l'arbre primaire (26) est déterminée par celle de l'arbre secondaire (28) et est supérieure à la vitesse initiale, il comporte une étape de découplage d'un manchon à crabots (56, 57, 58) et d'un pignon (41, 43, 45, 47, 48, 50) de la paire de pignons du rapport supérieur, puis une étape d'accélération du moteur (10) à la vitesse cible suivie d'une étape d'accouplement d'un manchon à crabots (56, 57, 58) et d'un pignon de la paire de pignons (41, 43, 45, 47, 48, 50) du rapport inférieur.

10. Procédé selon la revendication 9, dans lequel la phase de premier type est une phase de montée d'un rapport de vitesse.

11. Procédé selon la revendication 10, dans lequel lors de la phase de montée d'un rapport de vitesse, un effort est appliqué par un actionneur d'un manchon à crabots (56, 57, 58) avant une ouverture de l'embrayage (14) qui intervient simultanément à une commande d'actionnement du frein (59).

12. Procédé selon la revendication 11, dans lequel l'ouverture de l'embrayage (14) est partielle.

13. Procédé selon la revendication 10, dans lequel lors de la phase de montée d'un rapport de vitesse, l'embrayage (14) est fermé et l'étape d'actionnement du frein (59) suit l'étape de découplage du manchon à crabots (56, 57, 58) et du pignon de la paire de pignons (41, 43, 45, 47, 48, 50) du rapport inférieur.

14. Procédé selon la revendication 10, dans lequel lors de la phase de montée d'un rapport de vitesse, l'embrayage (14) est fermé et l'étape d'actionnement du frein (59) est simultanée à l'étape de découplage du manchon à crabots (56, 57, 58) et du pignon de la paire de pignons (41, 43, 45, 47, 48, 50) du rapport inférieur.

15. Procédé selon l'une quelconque des revendications 9 à 14, dans lequel lors de la phase de deuxième type de changement de rapport en rétrogradant, une ouverture de l'embrayage (14) et une fermeture de l'embrayage (14) sont effectuées respectivement avant et après l'étape de découplage du manchon à crabots (56, 57, 58) et du pignon (41, 43, 45, 47, 48, 50) de la paire de pignons du rapport supérieur.

16. Procédé selon l'une quelconque des revendications 9 à 14, dans lequel lors de la phase de deuxième type de changement de rapport en rétrogradant, une ouverture de l'embrayage (14) et une fermeture de l'embrayage (14) sont effectuées respectivement avant et après l'étape d'accouplement du manchon à crabots (56, 57, 58) et du pignon (41, 43, 45, 47, 48, 50) de la paire de pignons du rapport inférieur.

17. Procédé selon l'une quelconque des revendications 9 à 16, dans lequel la phase de premier type est une phase d'engagement d'un premier rapport de marche avant qui comporte une étape d'ouverture de l'embrayage (14), puis l'étape d'actionnement du frein (59) pendant laquelle l'arbre primaire (26) est freiné jusqu'à une vitesse cible déterminée par de l'arbre secondaire (28), suivie d'une étape de couplage d'un manchon à crabots (56, 57, 58) et d'un pignon (41, 43, 45, 47, 48, 50) de la paire de pignons du premier rapport, et d'une étape de fermeture de l'embrayage (14).

18. Procédé selon l'une quelconque des revendications 9 à 17 en combinaison de l'une quelconque des revendications 1 à 7, dans lequel la phase de premier type est une phase d'engagement du rapport de marche arrière qui comporte une étape d'ouverture de l'embrayage (14), puis une étape d'actionnement du frein (59) pendant laquelle l'arbre primaire (26) est freiné jusqu'à une vitesse cible déterminée par celle de l'arbre secondaire (28), suivie d'une étape de couplage d'un manchon à crabots (56, 57, 58) et d'un pignon (41, 43, 45, 47, 48, 50) de la paire de pignons du premier rapport, et d'une étape de fermeture de l'embrayage (14).
